# EUROPÄISCHE PATENTSCHRIFT

(11) **EP 3 643 846 B1**
(45) Veröffentlichungstag und Bekanntmachung des Hinweises auf die Patenterteilung: **01.12.2021**
(21) Anmeldenummer: 18202225.1
(22) Anmeldetag: 24.10.2018
(51) Int. Cl.: E04B 1/41, F16B 37/04, F16B 7/18

(54) **SCHIENE**
RAIL
RAIL

(43) Veröffentlichungstag der Anmeldung: 29.04.2020
(73) Patentinhaber: HALFEN GmbH, 40764 Langenfeld (DE)
(72) Erfinder: ALBARTUS, Dirk, 44795 Bochum (DE); JUSCHKAT, Bastian, 40789 Monheim (DE)
(74) Vertreter: Reinhardt, Annette

(56) Entgegenhaltungen:
- EP-A2- 0 278 252
- EP-B1- 0 278 252
- CN-A- 108 086 484
- US-B1- 6 379 077

## Beschreibung

Die Erfindung betrifft eine Schiene der im Oberbegriff des Anspruchs 1 angegebenen Gattung.

Aus der WO 2013/013375 A1 ist eine Schiene, nämlich eine Ankerschiene zur Einbettung in Beton bekannt, deren Schienenlippen an ihrer Innenseite eine Verzahnung tragen, in die ein Nutenstein eingreift. Derartige Verzahnungen werden üblicherweise genutzt, um zwischen dem Nutenstein bzw. einer Befestigungsschraube, die in der Schiene fixiert ist, und den Schienenlippen die Übertragung höherer Kräfte zu ermöglichen und die Kraftübertragung insbesondere in Längsrichtung der Schiene zu verbessern.

Aus der US 2010/0101175 A1 ist eine Schiene bekannt, deren Schienenlippen an ihrer den Längsschlitz begrenzenden Stirnseite eine Verzahnung tragen, in die ein Kopf einer Befestigungsschraube eingreift.

Die EP 0 278 252 A2 und die CN 108 086 484 A offenbaren Schienen, die an den Stirnseiten ihrer Schienenlippen eine Verzahnung tragen, die sich über die gesamte Dicke der Schienenlippen erstreckt.

Die US 6 379 077 B1 offenbart ein Befestigungssystem zur Verbindung von Betonteilen miteinander mit einer Aufnahme, in die ein Zapfen einführbar ist. Die Aufnahme weist Einführschrägen auf.

Die über die Verzahnung übertragbaren Kräfte sind abhängig von der Breite der einzelnen Zähne in Längsrichtung der Verzahnung und von der Tiefe der Verzahnung. Die Zahnbreite bestimmt gleichzeitig das Rastermaß, also den Mindestabstand zwischen zwei möglichen Positionen des Nutensteins oder der Befestigungsschraube. Um eine möglichst genaue Positionierung einer Befestigungsschraube bzw. eines Nutensteins zu ermöglichen, ist ein möglichst kleines Rastermaß wünschenswert. Die sich hieraus ergebende geringe Zahnbreite bedingt jedoch geringe übertragbare Kräfte.

Der Erfindung liegt die Aufgabe zugrunde, eine Schiene der gattungsgemäßen Art zu schaffen, die die Übertragung vergleichsweise hoher Kräfte bei möglichst geringer Breite der Zähne der Verzahnung ermöglicht.

Diese Aufgabe wird durch eine Schiene mit den Merkmalen des Anspruchs 1 gelöst.

Es ist vorgesehen, dass ein erster Abschnitt der Verzahnung an der Innenseite mindestens einer Schienenlippe angeordnet ist, und dass ein zweiter Abschnitt der Verzahnung sich an der Stirnseite der Schienenlippe erstreckt. Der an der Stirnseite verlaufende Abschnitt der Verzahnung besitzt einen Zahngrund, der mit der Außenseite der Schienenlippe einen Winkel von mehr als 30°einschließt. Der Zahngrund in dem ersten Abschnitt verläuft demnach zur Außenseite der Schienenlippe geneigt. Der Winkel zwischen der Außenseite der Schienenlippe und dem Zahngrund ist dabei in der Schienenlippe gemessen. Die Zähne der Verzahnung laufen vom ersten zum zweiten Abschnitt durch und erstrecken sich sowohl an der Innenseite als auch an der Stirnseite der Schienenlippe. Durch diesen Neigungswinkel wird eine große Zahnlänge erreicht. Die Zahnlänge ist dabei am Zahngrund gemessen, wobei sich die Zahnlänge als Summe der Länge des Zahngrunds in den einzelnen Abschnitten ergibt. Dadurch, dass sich die Verzahnung sowohl an der Innenseite als auch an der Stirnseite erstreckt, wird die Zahnlänge vergrößert, wodurch sich eine größere Lastübertragung ergibt. Dadurch kann die Zahntiefe und Zahnbreite geringer gewählt werden, so dass eine hohe Lastübertragung bei guter Feinjustierung möglich ist.

In bevorzugter Gestaltung besitzen beide Schienenlippen an ihren Innenseiten und ihren Stirnseiten eine Verzahnung. Die Verzahnung der beiden Schienenlippen ist vorteilhaft spiegelsymmetrisch zu einer Längsmittelebene der Schiene ausgebildet. Die Längsmittelebene ist eine Ebene, die in Längsrichtung der Schiene verläuft und den Längsschlitz mittig teilt. Bevorzugt ist die Schiene spiegelsymmetrisch zu der Längsmittelebene ausgebildet.

Der Winkel, den der Zahngrund in dem zweiten Abschnitt mit der Außenseite der Schienenlippe einschließt, beträgt vorteilhaft mindestens 45°, insbesondere mindestens 45° bis 120°, besonders vorteilhaft 60° bis 90°. In bevorzugter Gestaltung verläuft der Zahngrund in dem zweiten Abschnitt parallel zur Stirnseite oder ist gegenüber der Stirnseite um einen Winkel von bis zu 45°, insbesondere bis zu 30°, bevorzugt um einen Winkel von weniger als 20° geneigt. Dadurch lässt sich eine große Zahnlänge erreichen.

Vorteilhaft beträgt die senkrecht zur Außenseite der Schienenlippe gemessene Gesamthöhe der Verzahnung mindestens 120% der Verzahnungstiefe im ersten Abschnitt der Verzahnung. Die Gesamthöhe der Verzahnung ist demnach größer als die Verzahnungstiefe in dem an der Innenseite der Schienenlippe angeordneten ersten Abschnitt der Verzahnung. Die Verzahnungstiefe im ersten Abschnitt ist dabei senkrecht zum Zahngrund gemessen, während die Gesamthöhe der Verzahnung senkrecht zur Außenseite der Schienenlippe gemessen ist.

Die parallel zur Außenseite der Schienenlippe gemessene Gesamtbreite der Verzahnung beträgt vorteilhaft mindestens 120% der Verzahnungstiefe im zweiten Abschnitt der Verzahnung. Die Verzahnungstiefe im zweiten Abschnitt ist dabei senkrecht zum Zahngrund gemessen. Vorteilhaft erstrecken sich weder die Verzahnung im ersten Abschnitt noch die Verzahnung im zweiten Abschnitt über die gesamte Breite bzw. Höhe der Verzahnung. Die parallel zur Außenseite der Schienenlippe gemessene Breite des ersten Abschnitts der Verzahnung beträgt vorteilhaft mindestens 40%, insbesondere mindestens 60% der Breite der Schienenlippe. Die Breite der Verzahnung im ersten Abschnitt ist parallel zur Außenseite der Verzahnung am Zahngrund gemessen. Die Breite der Schienenlippe ist parallel zur Außenseite der Schienenlippe und von der Innenseite der Schienenlängsseite zum Längsschlitz gemessen. In besonders vorteilhafter Gestaltung erstreckt sich der erste Abschnitt über näherungsweise die gesamte Innenseite, so dass die Breite der Verzahnung im ersten Abschnitt mindestens 80%, insbesondere mindestens 90% der Breite der Schienenlippe beträgt. Die Breite des zweiten Abschnitts der Verzahnung beträgt vorteilhaft mindestens 20%, insbesondere mindestens 40% der Gesamtdicke der Schienenlippe. Die Breite des zweiten Abschnitts der Verzahnung ist senkrecht zur Außenseite der Schienenlippe gemessen. Verläuft die Stirnseite senkrecht zur Außenseite der Schienenlippe, so ist die Breite des zweiten Abschnitts der Verzahnung parallel zur Stirnseite der Schienenlippe gemessen. Die Gesamtdicke der Schienenlippe ist an der dicksten Stelle der Schienenlippe senkrecht zur Außenseite der Schienenlippe gemessen. In besonders vorteilhafter Gestaltung erstreckt sich der zweite Abschnitt der Verzahnung über die gesamte Stirnseite. Die Gesamthöhe der Verzahnung beträgt vorteilhaft mindestens 40%, insbesondere mindestens 60% der Gesamtdicke der Schienenlippe.

In bevorzugter Gestaltung ist die Dicke der Schienenlippe an der Schienenlängsseite kleiner als die Gesamtdicke der Schienenlippe. Die Dicke der Schienenlippe nimmt dabei vorteilhaft von der Schienenlängsseite in Richtung auf die Stirnseite, also in Richtung auf den Längsschlitz der Schiene, zu. Dadurch ergibt sich eine Hakenkopfform der Schienenlippe. Die Gesamtdicke der Schienenlippe beträgt vorteilhaft mindestens 50% der Breite der Schienenlippe. Die Schienenlippe ist demnach vergleichsweise dick ausgebildet. Derartige Schienen mit dicken Schienenlippen werden bevorzugt in einem Kaltformverfahren hergestellt. Im Kaltformverfahren kann sowohl die gewünschte Form der Schienenlippen als auch eine gewünschte Form der Verzahnung hergestellt werden.

Vorteilhaft nimmt die Verzahnungstiefe im ersten Abschnitt mit zunehmendem Abstand zur Schienenlängsseite zu. Im zweiten Abschnitt kann eine konstante Verzahnungstiefe vorteilhaft sein. Es kann jedoch auch vorteilhaft sein, dass auch im zweiten Abschnitt die Verzahnungstiefe variiert. Bevorzugt nimmt die Verzahnungstiefe im zweiten Abschnitt mit zunehmendem Abstand von der Außenseite der Schienenlippe zu. Bevorzugt endet die Verzahnung im zweiten Abschnitt vor der Außenseite der Schienenlippe.

Dadurch ist die Verzahnung von der Außenseite der Schiene nicht sichtbar, so dass sich ein ansprechendes Äußeres der Schiene ergibt.

Vorteilhaft ist die Gesamtlänge des Zahngrunds der Verzahnung größer als die Breite der Schienenlippe. Durch die Anordnung der Verzahnung sowohl an der Innenseite als auch an der Stirnseite der Schienenlippe kann auf einfache Weise die Zahnlänge vergrößert und dadurch die Tragfähigkeit erhöht werden. Die Außenseiten der beiden Schienenlippen liegen vorteilhaft in einer gemeinsamen Ebene und erstrecken sich bis zu dem Längsschlitz. Die Schienenlippen sind demnach eben ausgebildet. Die Schiene ist insbesondere eine Ankerschiene zur Einbettung in Beton, an deren Schienenrücken mindestens ein Anker festgelegt ist. Bei eingebauter Schiene schließen die Außenseiten vorteilhaft bündig mit einer Wandoberfläche ab. Der Längsschlitz liegt vorteilhaft bündig in der Wandoberfläche.

Ausführungsbeispiele der Erfindung werden im Folgenden anhand der Zeichnung erläutert. Es zeigen:
- Fig. 1: eine schematische Seitenansicht eines ersten Ausführungsbeispiels einer Schiene,
- Fig. 2: den Bereich einer Schienenlippe der Schiene aus Fig. 1 in vergrößerter, schematischer Darstellung,
- Fig. 3: eine schematische Seitenansicht eines zweiten Ausführungsbeispiels einer Schiene mit daran angeordneter Hakenkopfschraube,
- Fig. 4: die Anordnung aus Fig. 3 in perspektivischer Darstellung,
- Fig. 5: den Ausschnitt V aus Fig. 4 in vergrößerter Darstellung,
- Fig. 6 bis 9: schematische Darstellungen von Ausführungsbeispielen von Schienen.

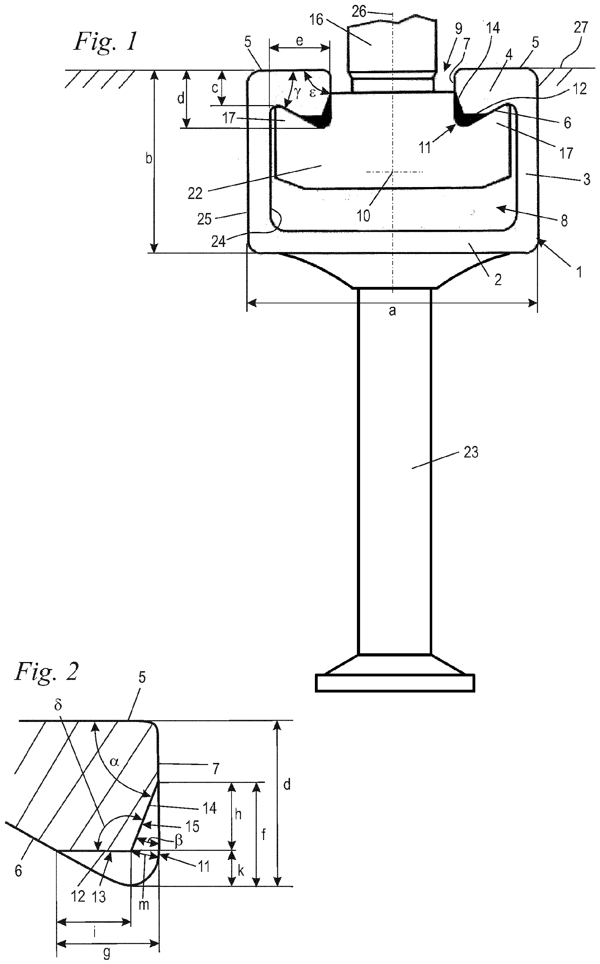

Fig. 1 zeigt in schematischer Seitenansicht eine Schiene 1, an der eine Hakenkopfschraube 16 festgelegt ist. Die Schiene 1 ist eine Ankerschiene. Die Schiene 1 besitzt einen Schienenrücken 2, der im Ausführungsbeispiel eben ausgebildet ist. Die Schiene 1 erstreckt sich in einer Längsrichtung 10, die in der Darstellung in Fig. 1 senkrecht zur Blattebene angeordnet ist. Die Schiene 1 ist im Ausführungsbeispiel symmetrisch zu einer Längsmittelebene 26 ausgebildet, die in Längsrichtung 10 verläuft. An den beiden in Längsrichtung 10 verlaufenden Seiten des Schienenrückens 2 sind Schienenlängsseiten 3 angeordnet, die ebenfalls in Längsrichtung 10 verlaufen. Im Ausführungsbeispiel sind die Schienenlängsseiten 3 senkrecht zum Schienenrücken 2 angeordnet.

Die Schienenlängsseiten 3 bilden mit dem Schienenrücken 2 einen etwa U-förmigen Querschnitt. Auch andere Querschnittsformen der Schiene 1, insbesondere Querschnitte mit gebogenem Verlauf von Schienenrücken 2 und/oder Schienenlängsseiten 3, können jedoch vorteilhaft sein. An den dem Schienenrücken 2 abgewandten Seiten der Schienenlängsseiten 3 sind Schienenlippen 4 angeordnet, die von den Schienenlängsseiten 3 aufeinander zu ragen. Die beiden Schienenlippen 4 begrenzen zwischen sich einen Längsschlitz 9. Der Schienenrücken 2, die Schienenlängsseiten 3 sowie die Schienenlippen 4 begrenzen einen Schieneninnenraum 8. Durch den Längsschlitz 9 ragt die Hakenkopfschraube 16 in den Schieneninnenraum 8. In dem Schieneninnenraum 8 ist ein Kopf 22 der Hakenkopfschraube 16 angeordnet, der die Schienenlippen 4 hintergreift.

Anstatt der Hakenkopfschraube 16 kann auch eine Mutter im Schieneninnenraum 8 angeordnet sein, in die eine Befestigungsschraube eingeschraubt ist, die durch den Längsschlitz 9 nach außen ragt.

Die Schienenlippen 4 besitzen jeweils eine Außenseite 5, die dem Schieneninnenraum 8 abgewandt liegt, sowie eine dem Schieneninnenraum 8 zugewandte Innenseite 6. Die Stirnseiten 7 der Schienenlippen 4 begrenzen zwischen sich den Längsschlitz 9. Die Außenseiten 5, die Innenseiten 6 sowie die Stirnseiten 7 erstrecken sich in Längsrichtung 10 der Schiene 1. Wie Fig. 1 zeigt, nimmt die Dicke der Schienenlippen von den Schienenlängsseiten 3 in Richtung auf die Stirnseiten 7 zu. Beide Schienenlippen 4 sind dabei spiegelsymmetrisch zur Längsmittelebene 26 ausgebildet. Bezugszeichen in den Figuren, die der besseren Übersicht halber nur an der einen der Schienenlippen 4 eingezeichnet sind, bezeichnen Elemente, die an der anderen Schienenlippe 4 entsprechend vorhanden sind. Benachbart zu den Schienenlängsseiten 3 besitzen die Schienenlippen 4 eine Dicke c, die senkrecht zu den Außenseiten 5 gemessen ist. Die Schienenlippen 4 besitzen nahe den Stirnseiten 7 eine Gesamtdicke d, die deutlich größer als die Dicke c an den Schienenlängsseiten 3 ist. Die Gesamtdicke d ist an der dicksten Stelle der Schienenlippen 4 senkrecht zur Außenseite 5 gemessen. Die Innenseiten 6 der Schienenlippen 4 sind zu den Außenseiten 5 um einen Winkel γ geneigt, der vorteilhaft von 20° bis 70° beträgt. Im Ausführungsbeispiel ist ein Winkel γ von 30° bis 40° vorgesehen. Der Winkel γ ist dabei in der Schienenlippe 4 gemessen.

Wie Fig. 1 zeigt, besitzt die Hakenkopfschraube 16 an ihrem Kopf 22 Hakenabschnitte 17, die hinter den Schienenlippen 4 eingreifen und in einem dem Winkel γ entsprechenden Winkel geneigt verlaufen. Über die Hakenabschnitte 17 zentriert sich die Hakenkopfschraube 16 in dem Längsschlitz 9.

Wie Fig. 1 auch zeigt, besitzt die Schiene 1 eine parallel zu den Außenseiten 5 gemessene Breite a, sowie eine senkrecht zur Außenseite 5 gemessene Höhe b. Im Ausführungsbeispiel ist die Breite a größer als die Höhe b. Die Gesamtdicke d der Schienenlippen 4 beträgt weniger als die Hälfte, vorteilhaft weniger als 40% der Höhe b. Die Gesamtdicke d der Schienenlippen 4 beträgt vorteilhaft mindestens das 1,2fache, insbesondere mindestens das 1,5fache der Dicke c.

Die Schienenlängsseiten 3 besitzen eine den Schieneninnenraum 8 begrenzende Innenseite 24 sowie eine der Innenseite 24 abgewandte Außenseite 25. Die Schienenlippen 4 besitzen eine Breite e, die vorteilhaft weniger als ein Drittel, insbesondere weniger als ein Viertel der Breite a der Schiene 1 beträgt. Die Breite e ist dabei jeweils senkrecht zur Längsrichtung 10 und senkrecht zu den Schienenlängsseiten 3 von der Innenseite 24 der angrenzenden Schienenlängsseite 3 bis zu der Stirnseite 7 der Schienenlippe 4 gemessen.

Wie Fig. 1 auch zeigt, ist am Schienenrücken 2 ein Anker 23 fixiert. Vorteilhaft sind mehrere Anker 23 in gleichmäßigem Abstand in Längsrichtung 10 am Schienenrücken 2 fixiert. Die Schiene 1 ist vorteilhaft zur Einbettung in Beton vorgesehen. Die Anker 23 verbessern die Verankerung der Schiene 1 im Beton. Die Außenseiten 5 der Schienenlippen 4 schließen vorteilhaft bündig mit einer Außenseite des Betons, beispielsweise einer Bauteiloberfläche wie einer Wand, einer Decke oder dgl., ab. In Fig. 1 ist schematisch eine Wandoberfläche 27 gezeigt, in der die Außenseiten 5 bündig liegen.

Über die Hakenkopfschraube 16 werden Kräfte in allen Raumrichtungen auf die Schiene 1 übertragen. Insbesondere zur Verbesserung der Übertragung der in Längsrichtung 10 wirkenden Kräfte tragen die Schienenlippen 4 jeweils eine Verzahnung 11. Die Verzahnungen 11 der beiden Schienenlippen 4 sind im Ausführungsbeispiel spiegelsymmetrisch zur Längsmittelebene 26 ausgebildet. Jede Verzahnung 11 umfasst einen ersten Abschnitt 12, der sich an der Innenseite 6 erstreckt, sowie einen zweiten Abschnitt 14, der sich an der Stirnseite 7 erstreckt. Dadurch, dass sich die Verzahnung 11 sowohl an der Innenseite 6 als auch an der Stirnseite 7 erstreckt, kann eine größere Länge des Zahngrunds, also eine größere Zahnlänge erreicht werden. Es kann jedoch auch vorgesehen sein, dass die Verzahnungen 11 der beiden Schienenlippen 4 unsymmetrisch ausgebildet sind, insbesondere, dass nur eine der Verzahnungen sowohl einen ersten Abschnitt 12 an der Innenseite 6 als auch einen zweiten Abschnitt 14 an der Stirnseite 7 besitzt.

Fig. 2 zeigt die Gestaltung der Verzahnung 11 im Einzelnen. Der erste Abschnitt 12 besitzt einen Zahngrund 13, der im Ausführungsbeispiel parallel zur Außenseite 5 verläuft. Der Zahngrund 13 schließt mit der Außenseite 5 vorteilhaft einen Winkel von weniger als 45°, insbesondere von weniger als 30°, bevorzugt weniger als 20° ein. Der zweite Abschnitt 14 der Verzahnung 11 besitzt einen Zahngrund 15. Der Zahngrund 15 verläuft gegenüber der Außenseite 5 um einen Winkel α geneigt, der kleiner als 90° ist. Der Winkel α ist vorteilhaft größer als 30° und beträgt insbesondere mindestens 45°, insbesondere 45° bis 120°. Im Ausführungsbeispiel ist ein Winkel α von etwa 60° bis 90°, insbesondere von etwa 70° vorgesehen. Der Zahngrund 13 im ersten Abschnitt und der Zahngrund 15 im zweiten Abschnitt schließen einen Winkel δ ein, der im Ausführungsbeispiel größer als 90° ist. Der Winkel δ beträgt im Ausführungsbeispiel etwa 100° bis 120°, insbesondere näherungsweise 110°. Der Zahngrund 15 ist zur Stirnseite 7 um einen Winkel β geneigt, der im Ausführungsbeispiel 10° bis 30°, insbesondere etwa 20° beträgt.

Der erste Abschnitt 12 der Verzahnung 11 besitzt eine Breite i, die parallel zur Außenseite 5 und senkrecht zur Längsrichtung 10 (Fig. 1) gemessen ist. Die Breite i ist die Breite am Zahngrund 13. Die Breite i beträgt vorteilhaft mindestens 40%, insbesondere mindestens 60% der Breite e der Schienenlippe 4. Die am Zahngrund 15 des zweiten Abschnitts 14 und senkrecht zur Außenseite 5 gemessene Breite h des zweiten Abschnitts 14 beträgt vorteilhaft mindestens 20%, insbesondere mindestens 40% der Gesamtdicke d der Schienenlippe 4. Die Verzahnung 11 besitzt eine Gesamthöhe f, die ebenfalls senkrecht zur Außenseite 5, also parallel zur Breite h, gemessen ist. Die Verzahnung 11 besitzt eine Verzahnungstiefe, die senkrecht zum Zahngrund 13, 15 gemessen ist. Im ersten Abschnitt 12 beträgt die senkrecht zum Zahngrund 13 gemessene Verzahnungstiefe k weniger als die Gesamthöhe f der Verzahnung 11. Die Verzahnungstiefe k ist im Ausführungsbeispiel kleiner als die Breite h des zweiten Abschnitts 14 der Verzahnung 11. Der zweite Abschnitt 14 besitzt eine senkrecht zum Zahngrund 15 gemessene Verzahnungstiefe m. Die Verzahnungstiefe m ist im Ausführungsbeispiel kleiner als die Verzahnungstiefe k. Die Verzahnungstiefe m ist auch kleiner als die Breite i der Verzahnung 11 im ersten Abschnitt 12. Die Gesamthöhe f der Verzahnung beträgt mindestens 120% der Verzahnungstiefe k im ersten Abschnitt 12. Die Gesamtbreite g der Verzahnung 11 beträgt mindestens 120% der Verzahnungstiefe m im zweiten Abschnitt 14.

Die Verzahnung 11 besitzt eine Gesamtlänge des Zahngrunds, die sich aus der Länge des Zahngrunds 13, die der Breite i entspricht, sowie der Länge des Zahngrunds 15 zusammensetzt. Die Gesamtlänge des Zahngrunds ist im Ausführungsbeispiel größer als die Breite e der Schienenlippe 4. Dadurch, dass die Verzahnung 11 auch an den Stirnseiten 7 angeordnet wird, lässt sich eine größere Gesamtlänge des Zahngrunds erzielen, als wenn die Verzahnung ausschließlich an den Innenseiten 6 oder den Stirnseiten 7 angeordnet wird. Im Ausführungsbeispiel nimmt die Verzahnungstiefe k im ersten Abschnitt mit zunehmendem Abstand zur Schienenlängsseite 3 zu, wie die Figuren 1 und 2 zeigen. Die Gesamtdicke d der Schienenlippe 4 beträgt vorteilhaft mindestens 50% der Breite e der Schienenlippe 4. Die Breite h der Verzahnung im zweiten Abschnitt 14 beträgt mindestens 20%, insbesondere mindestens 40% der Gesamtdicke d der Schienenlippe.

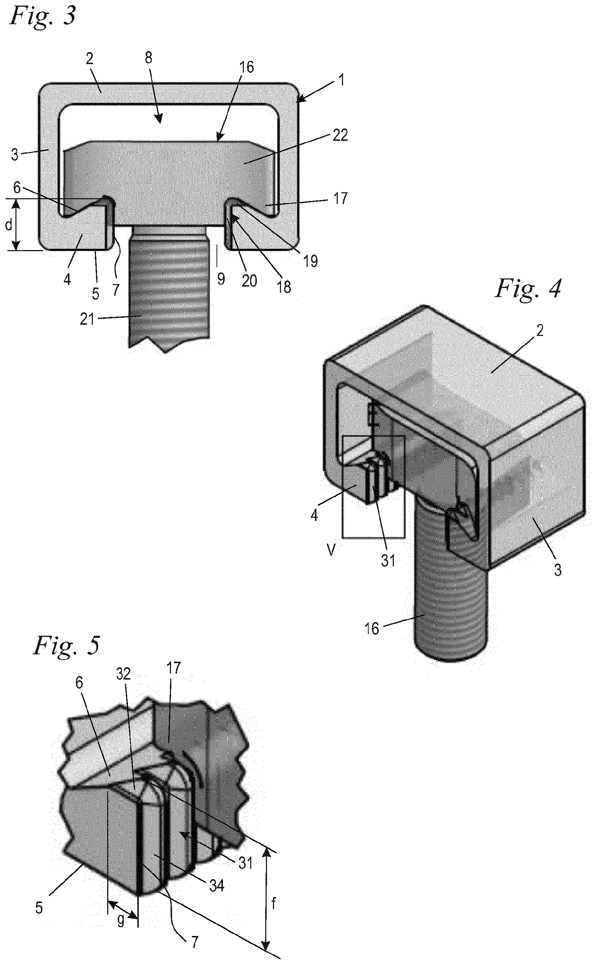

Die Figuren 3 bis 5 zeigen ein Ausführungsbeispiel einer Schiene 1, die eine Verzahnung 31 (Figuren 4 und 5) besitzt. Gleiche Bezugszeichen bezeichnen dabei in allen Ausführungsbeispielen einander entsprechende Elemente. In der Schiene 1 ist eine Hakenkopfschraube 16 angeordnet, die eine Verzahnung 18 trägt. Die Verzahnung 18 der Hakenkopfschraube 16 besitzt einen ersten Abschnitt 19, der in einen ersten Abschnitt 32 (Fig. 5) der Verzahnung 31 eingreift. Die Verzahnung 18 besitzt außerdem einen zweiten Abschnitt 20, der in den zweiten Abschnitt 34 der Verzahnung 31 eingreift (Fig. 5). Der erste Abschnitt 19 der Verzahnung 18 ist an der Innenseite 6 der Schienenlippe 4 angeordnet, und der zweite Abschnitt 20 ist benachbart zur Stirnseite 7 angeordnet. Wie Fig. 3 zeigt, besitzt die Hakenkopfschraube 16 einen Gewindebolzen 21, mit dem die Hakenkopfschraube 16 durch den Längsschlitz 9 nach außen ragt.

Fig. 5 zeigt die Verzahnung 31 in der Schiene 1 im Einzelnen. Die Verzahnung 31 besitzt einen ersten Abschnitt 32 an der Innenseite 6 der Schienenlippe 4, sowie einen zweiten Abschnitt 34, der sich an der Stirnseite 7 erstreckt. Die Verzahnung 31 besitzt eine Gesamtbreite g und eine Gesamthöhe f. Die Gesamthöhe f der Verzahnung 31 entspricht der Gesamtdicke d der Schienenlippen 4 (Fig. 3). Der zweite Abschnitt 34 der Verzahnung 11 erstreckt sich bis an die Außenseite 5.

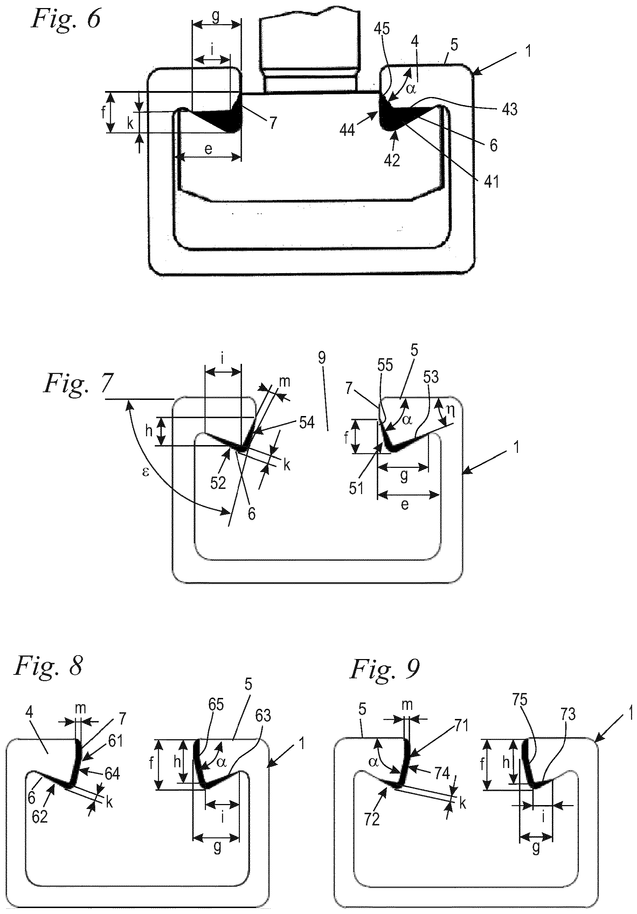

Die Figuren 6 bis 9 zeigen weitere Ausführungsbeispiele von Schienen 1. Bei dem in Fig. 6 gezeigten Ausführungsbeispiel einer Verzahnung 41 ist der erste Abschnitt 42 der Verzahnung 41, der an der Innenseite 6 der Schienenlippen 4 verläuft, breiter ausgebildet als in den vorangegangenen Ausführungsbeispielen. Der erste Abschnitt 42 besitzt eine Breite i, die mehr als 50% der Breite e der Schienenlippe 4 entspricht. Der Zahngrund 43 im ersten Abschnitt 42 verläuft dabei parallel zur Außenseite 5 der Schienenlippe 4. Da die Gestaltung der Schiene 1 und die Neigung der Innenseite 6 der Schienenlippe 4 den vorangegangenen Ausführungsbeispielen entsprechen, ist die Verzahnungstiefe k im ersten Abschnitt 42 vergrößert. Im Ausführungsbeispiel erstreckt sich die Verzahnungstiefe k über mehr als die Hälfte der Gesamthöhe f der Verzahnung 41. Die Verzahnung 41 besitzt einen zweiten Abschnitt 44, der sich an der Stirnseite 7 erstreckt. Der Zahngrund 45 im zweiten Abschnitt 44 ist zur Außenseite 5 der Schiene 1 um einen Winkel α geneigt, der dem zur Verzahnung 11 beschriebenen Winkel α vorteilhaft entspricht.

Bei dem in Fig. 7 gezeigten Ausführungsbeispiel verläuft die Stirnseite 7 nur in einem an die Außenseite 5 angrenzenden Abschnitt der Schienenlippe 4 senkrecht zur Außenseite 5. In einem daran angrenzenden Abschnitt ist die Stirnseite 7 vom Längsschlitz 9 weg geneigt. Der Winkel ε zwischen der Stirnseite 7 und der Außenseite 5 beträgt in diesem Bereich vorteilhaft von 50° bis 85°, insbesondere von 60° bis 80°. Im Ausführungsbeispiel verläuft die Stirnseite 7 in diesem Bereich leicht gebogen. An den Schienenlippen 4 ist eine Verzahnung 51 vorgesehen, die sich jeweils an der Innenseite 6 und der Stirnseite 7 einer Schienenlippe 4 erstreckt. Die Verzahnung 51 besitzt einen ersten Abschnitt 52, der einen Zahngrund 53 besitzt, sowie einen zweiten Abschnitt 54 an den Stirnseiten 7, der einen Zahngrund 55 besitzt. Der Zahngrund 53 verläuft nicht parallel zur Außenseite 5, sondern schließt mit der Außenseite 5 einen Winkel η ein, der im Ausführungsbeispiel mehr als 10° beträgt. Vorteilhaft beträgt der Winkel η 15° bis 45°, insbesondere 20° bis 40°. Der Winkel η ist dabei im Ausführungsbeispiel kleiner als der Winkel a, um den der Zahngrund 55 im zweiten Abschnitt 54 zur Außenseite 5 geneigt ist. Auch der Winkel η ist in der Schienenlippe 4 gemessen. Die Verzahnung 51 besitzt eine Gesamtbreite g, die mindestens 70% der Breite e der Schienenlippe 4 entspricht. Die Verzahnung 51 besitzt eine Gesamthöhe f, die weniger als 80% der Gesamtdicke d (Fig. 1) der Schienenlippe 4 beträgt. Die Verzahnungstiefe k im ersten Abschnitt 52 entspricht im Ausführungsbeispiel näherungsweise der Verzahnungstiefe m im zweiten Abschnitt 54.

Fig. 8 zeigt ein Ausführungsbeispiel, bei dem an den Schienenlippen 4 jeweils eine Verzahnung 61 angeordnet ist. Jede Verzahnung 61 besitzt einen ersten Abschnitt 62 an der Innenseite 6 einer Schienenlippe 4, der einen Zahngrund 63 besitzt, sowie einen zweiten Abschnitt 64, der sich an einer Stirnseite 7 erstreckt und einen Zahngrund 65 besitzt. Wie Fig. 8 zeigt, erstreckt sich der zweite Abschnitt 64 über die gesamte Stirnseite 7. Der erste Abschnitt 62 erstreckt sich näherungsweise über die gesamte Innenseite 6. Dadurch wird eine große Länge des Zahngrunds der Verzahnung 61 erreicht.

Die Verzahnungstiefe k im ersten Abschnitt 62 entspricht näherungsweise der Verzahnungstiefe m im zweiten Abschnitt 64. Die Breite h des zweiten Abschnitts 64 beträgt mindestens 80% der Gesamthöhe f der Verzahnung 61. Die Breite i im ersten Abschnitt 62 beträgt mindestens 60% der Gesamtbreite g der Verzahnung 61. Sowohl im ersten Abschnitt 62 als auch im zweiten Abschnitt 64 verläuft der Zahngrund 63, 65 geneigt zur Außenseite 5.

Fig. 9 zeigt ein Ausführungsbeispiel, bei dem eine Verzahnung 71 mit einem ersten Abschnitt 72 und einem zweiten Abschnitt 74 vorgesehen ist. Der erste Abschnitt 72 besitzt einen Zahngrund 73, der mit der Außenseite 5 einen Winkel von mehr als 10° einschließt. Ein Zahngrund 75 im zweiten Abschnitt 74 schließt mit der Außenseite 5 einen Winkel a ein, der vorteilhaft 60° bis 90° beträgt. Im Ausführungsbeispiel ist der Winkel α in dem weiter von der Außenseite 5 entfernten Bereich des zweiten Abschnitts 74 kleiner als in dem an die Außenseite 5 angrenzenden Bereich. Auch der Zahngrund 73 verläuft zur Außenseite 5 geneigt. Dadurch ergibt sich eine geringe Verzahnungstiefe k, m. Die Zahnlänge ist vergleichsweise groß.

Die Ausführungsbeispiele zeigen vorteilhafte Gestaltungen. Weitere vorteilhafte Gestaltungen können durch beliebige Kombination der einzelnen Merkmale der unterschiedlichen Ausführungsbeispiele innerhalb des Schutzbereiches der beigefügten Ansprüche entstehen.

## Patentansprüche

1. Schiene mit einem Schienenrücken (2), zwei Schienenlängsseiten (3) und zwei Schienenlippen (4), wobei die Schienenlippen (4) von den Schienenlängsseiten (3) aufeinander zu ragen, wobei der Schienenrücken (2), die Schienenlängsseiten (3) und die Schienenlippen (4) einen Schieneninnenraum (8) begrenzen, wobei jede Schienenlippe (4) eine dem Schieneninnenraum (8) zugewandte Innenseite (6) und eine dem Schieneninnenraum (8) abgewandte Außenseite (5) besitzt, wobei die Schienenlippen (4) Stirnseiten (7) besitzen, die zwischen sich einen in Längsrichtung (10) der Schiene (1) verlaufenden Längsschlitz (9) begrenzen, wobei mindestens eine Schienenlippe (4) an ihren Innenseiten (6) eine Verzahnung (11, 31, 41, 51, 61, 71) trägt, die sich bis an die Stirnseite (7) erstreckt, **dadurch gekennzeichnet, dass** an der Innenseite (6) mindestens einer Schienenlippe (4) ein erster Abschnitt (12, 32, 42, 52, 62, 72) der Verzahnung (11, 31, 41, 51, 61, 71) angeordnet ist, und dass die Verzahnung (11, 31, 41, 51, 61, 71) mindestens einen zweiten Abschnitt (14, 34, 44, 54, 64,7 4) besitzt, der sich an der Stirnseite (7) erstreckt und in dem der Zahngrund (15, 45, 55, 65, 75) mit der Außenseite (5) der Schienenlippe (4) einen Winkel (a) von mehr als 30° einschließt, wobei in dem ersten Abschnitt (12, 32, 42, 52, 62, 72) die senkrecht zum Zahngrund (13, 33, 43, 53 ,63, 73) gemessene Verzahnungstiefe (k) weniger als die senkrecht zur Außenseite (5) der Schienenlippe (4) gemessene Gesamthöhe (f) der Verzahnung (11, 31, 41, 51, 61, 71) beträgt.

2. Schiene nach Anspruch 1,
**dadurch gekennzeichnet, dass** der Winkel (α) mindestens 45°, insbesondere 45° bis 120° beträgt.

3. Schiene nach Anspruch 1 oder 2,
**dadurch gekennzeichnet, dass** die senkrecht zur Außenseite (5) der Schienenlippe (4) gemessene Gesamthöhe (f) der Verzahnung (11, 31, 41, 51, 61, 71) mindestens 120% der senkrecht zum Zahngrund (13) gemessenen Verzahnungstiefe (k) im ersten Abschnitt (12, 42, 52, 62, 72) der Verzahnung (11, 31, 41, 51, 61, 71) beträgt.

4. Schiene nach einem der Ansprüche 1 bis 3,
**dadurch gekennzeichnet, dass** die parallel zur Außenseite (5) der Schienenlippe (4) senkrecht zur Längsrichtung (10) gemessene Gesamtbreite (g) der Verzahnung (11, 31, 41, 51, 61, 71) mindestens 120% der senkrecht zum Zahngrund (13) gemessenen Verzahnungstiefe (m) im zweiten Abschnitt (14, 34, 44, 54, 64, 74) der Verzahnung (11, 31, 41, 51, 61, 71) beträgt.

5. Schiene nach einem der Ansprüche 1 bis 4,
**dadurch gekennzeichnet, dass** der erste Abschnitt (12, 32, 42, 52, 62, 72) der Verzahnung (11, 31, 41, 51, 61, 71) eine parallel zur Außenseite (5) der Schienenlippe (4) und senkrecht zur Längsrichtung (10) gemessene Breite (i) besitzt, die mindestens 40%, insbesondere mindestens 60% der parallel zur Außenseite (5) der Schienenlippe (4) und senkrecht zur Längsrichtung (10) sowie von der Innenseite (24) der Schienenlängsseite (3) zum Längsschlitz (9) gemessenen Breite (e) der Schienenlippe (4) beträgt.

6. Schiene nach einem der Ansprüche 1 bis 5,
**dadurch gekennzeichnet, dass** der zweite Abschnitt (14, 34, 44, 54, 64, 74) der Verzahnung (11, 31, 41, 51, 61, 71) eine am Zahngrund (15) senkrecht zur Außenseite (5) der Schienenlippe (4) gemessene Breite (h) besitzt, die mindestens 20%, insbesondere mindestens 40% der an der dicksten Stelle der Schienenlippe (4) senkrecht zur Außenseite (5) der Schienenlippe (4) gemessenen Gesamtdicke (d) der Schienenlippe (4) beträgt.

7. Schiene nach einem der Ansprüche 1 bis 6,
**dadurch gekennzeichnet, dass** die senkrecht zur Außenseite (5) der Schienenlippe (4) gemessene Gesamthöhe (f) der Verzahnung (11, 31, 41, 51, 61, 71) mindestens 40%, insbesondere mindestens 60% der an der dicksten Stelle der Schienenlippe (4) senkrecht zur Außenseite (5) der Schienenlippe (4) gemessenen Gesamtdicke (d) der Schienenlippe (4) beträgt.

8. Schiene nach einem der Ansprüche 1 bis 7,
**dadurch gekennzeichnet, dass** die senkrecht zu der Außenseite (5) der Schienenlippe (4) gemessene Dicke (c) der Schienenlippe (4) an der Schienenlängsseite (3) kleiner als die an der dicksten Stelle der Schienenlippe (4) senkrecht zur Außenseite (5) der Schienenlippe (4) gemessene Gesamtdicke (d) der Schienenlippe (4) ist.

9. Schiene nach einem der Ansprüche 1 bis 8,
**dadurch gekennzeichnet, dass** die an der dicksten Stelle der Schienenlippe (4) senkrecht zur Außenseite (5) der Schienenlippe (4) gemessene Gesamtdicke (d) der Schienenlippe (4) mindestens 50% der parallel zur Außenseite (5) der Schienenlippe (4) und senkrecht zur Längsrichtung (10) sowie von der Innenseite (24) der Schienenlängsseite (3) zum Längsschlitz (9) gemessenen Breite (e) der Schienenlippe (4) ist.

10. Schiene nach einem der Ansprüche 1 bis 9,
**dadurch gekennzeichnet, dass** die senkrecht zum Zahngrund (13) gemessene Verzahnungstiefe (k) im ersten Abschnitt (12, 42, 52, 62 72) mit zunehmendem Abstand zur Schienenlängsseite (3) zunimmt.

11. Schiene nach einem der Ansprüche 1 bis 10,
**dadurch gekennzeichnet, dass** die Gesamtlänge des Zahngrunds der Verzahnung (11, 31, 41, 51, 61, 71) größer als die parallel zur Außenseite (5) der Schienenlippe (4) und senkrecht zur Längsrichtung (10) sowie von der Innenseite (24) der Schienenlängsseite (3) zum Längsschlitz (9) gemessene Breite (e) der Schienenlippe (4) ist.

12. Schiene nach einem der Ansprüche 1 bis 11,
**dadurch gekennzeichnet, dass** die Außenseiten (5) der beiden Schienenlippen (4) in einer gemeinsamen Ebene liegen.

13. Schiene nach einem der Ansprüche 1 bis 12,
**dadurch gekennzeichnet, dass** die Schiene (1) eine Ankerschiene zur Einbettung in Beton ist, an deren Schienenrücken (2) mindestens ein Anker (23) festgelegt ist.

## Claims

1. Rail having a rail back (2), two rail longitudinal sides (3) and two rail lips (4), wherein the rail lips (4) project towards one another from the rail longitudinal sides (3), wherein the rail back (2), the rail longitudinal sides (3) and the rail lips (4) delimit a rail interior (8), wherein each rail lip (4) has an inner side (6) facing the rail interior (8) and an outer side (5) facing away from the rail interior (8), wherein the rail lips (4) have end sides (7) which between them delimit a longitudinal slot (9) which runs in the longitudinal direction (10) of the rail (1), wherein at least one rail lip (4) bears on its inner sides (6) a toothing (11, 31, 41, 51, 61, 71) which extends up to the end side (7),
**characterized in that** a first portion (12, 32, 42, 52, 62, 72) of the toothing (11, 31, 41, 51, 61, 71) is arranged on the inner side (6) of at least one rail lip (4), and **in that** the toothing (11, 31, 41, 51, 61, 71) has at least one second portion (14, 34, 44, 54, 64, 74) which extends on the end side (7) and in which the tooth base (15, 45, 55, 65, 75) encloses an angle (α) of more than 30° with the outer side (5) of the rail lip (4), wherein, in the first portion (12, 32, 42, 52, 62, 72), the toothing depth (k) measured perpendicular to the tooth base (13, 33, 43, 53, 63, 73) is less than the total height (f) of the toothing (11, 31, 41, 51, 61, 71) measured perpendicular to the outer side (5) of the rail lip (4).

2. Rail according to Claim 1,
**characterized in that** the angle (α) is at least 45°, in particular 45° to 120°.

3. Rail according to Claim 1 or 2,
**characterized in that** the total height (f) of the toothing (11, 31, 41, 51, 61, 71) measured perpendicular to the outer side (5) of the rail lip (4) is at least 120% of the toothing depth (k), measured perpendicular to the tooth base (13), in the first portion (12, 42, 52, 62, 72) of the toothing (11, 31, 41, 51, 61, 71).

4. Rail according to one of Claims 1 to 3,
**characterized in that** the total width (g) of the toothing (11, 31, 41, 51, 61, 71) measured parallel to the outer side (5) of the rail lip (4) perpendicular to the longitudinal direction (10) is at least 120% of the toothing depth (m), measured perpendicular to the tooth base (13), in the second portion (14, 34, 44, 54, 64, 74) of the toothing (11, 31, 41, 51, 61, 71).

5. Rail according to one of Claims 1 to 4,
**characterized in that** the first portion (12, 32, 42, 52, 62, 72) of the toothing (11, 31, 41, 51, 61, 71) has a width (i), measured parallel to the outer side (5) of the rail lip (4) and perpendicular to the longitudinal direction (10), which is at least 40%, in particular at least 60%, of the width (e) of the rail lip (4) measured parallel to the outer side (5) of the rail lip (4) and perpendicular to the longitudinal direction (10) and from the inner side (24) of the rail longitudinal side (3) to the longitudinal slot (9).

6. Rail according to one of Claims 1 to 5,
**characterized in that** the second portion (14, 34, 44, 54, 64, 74) of the toothing (11, 31, 41, 51, 61, 71) has a width (h), measured on the tooth base (15) perpendicular to the outer side (5) of the rail lip (4), which is at least 20%, in particular at least 40%, of the total thickness (d) of the rail lip (4) measured at the thickest point of the rail lip (4) perpendicular to the outer side (5) of the rail lip (4).

7. Rail according to one of Claims 1 to 6,
**characterized in that** the total height (f) of the toothing (11, 31, 41, 51, 61, 71) measured perpendicular to the outer side (5) of the rail lip (4) is at least 40%, in particular at least 60%, of the total thickness (d) of the rail lip (4) measured at the thickest point of the rail lip (4) perpendicular to the outer side (5) of the rail lip (4).

8. Rail according to one of Claims 1 to 7,
**characterized in that** the thickness (c) of the rail lip (4) on the rail longitudinal side (3) as measured perpendicular to the outer side (5) of the rail lip (4) is less than the total thickness (d) of the rail lip (4) as measured at the thickest point of the rail lip (4) perpendicular to the outer side (5) of the rail lip (4).

9. Rail according to one of Claims 1 to 8,
**characterized in that** the total thickness (d) of the rail lip (4) as measured at the thickest point of the rail lip (4) perpendicular to the outer side (5) of the rail lip (4) is at least 50% of the width (e) of the rail lip (4) as measured parallel to the outer side (5) of the rail lip (4) and perpendicular to the longitudinal direction (10) and from the inner side (24) of the rail longitudinal side (3) to the longitudinal slot (9).

10. Rail according to one of Claims 1 to 9,
**characterized in that** the toothing depth (k), measured perpendicular to the tooth base (13), in the first portion (12, 42, 52, 62, 72) increases with increasing distance from the rail longitudinal side (3).

11. Rail according to one of Claims 1 to 10,
**characterized in that** the total length of the tooth base of the toothing (11, 31, 41, 51, 61, 71) is greater than the width (e) of the rail lip (4) as measured parallel to the outer side (5) of the rail lip (4) and perpendicular to the longitudinal direction (10) and from the inner side (24) of the rail longitudinal side (3) to the longitudinal slot (9).

12. Rail according to one of Claims 1 to 11,
**characterized in that** the outer sides (5) of the two rail lips (4) lie in a common plane.

13. Rail according to one of Claims 1 to 12,
haracterized in that the rail (1) is an anchor rail for embedding in concrete, the rail back (2) thereof having at least one anchor (23) fastened thereto.

## Revendications

1. Rail comportant un dos de rail (2), deux côtés longitudinaux de rail (3) et deux lèvres de rail (4), les lèvres de rail (4) faisant saillie l'une vers l'autre à partir des côtés longitudinaux de rail (3), le dos de rail (2), les côtés longitudinaux de rail (3) et les lèvres de rail (4) délimitant un espace intérieur de rail (8), chaque lèvre de rail (4) présentant un côté intérieur (6) tourné vers l'espace intérieur de rail (8) et un côté extérieur (5) opposé à l'espace intérieur de rail (8), les lèvres de rail (4) présentant des côtés frontaux (7) qui délimitent entre eux une fente longitudinale (9) s'étendant dans la direction longitudinale (10) du rail (1), au moins une lèvre de rail (4) supportant sur ses côtés intérieurs (6) une denture (11, 31, 41, 51, 61, 71) qui s'étend jusqu'au côté frontal (7),
**caractérisé en ce qu'**une première partie (12, 32, 42, 52, 62, 72) de la denture (11, 31, 41, 51, 61, 71) est disposée sur le côté intérieur (6) d'au moins une lèvre de rail (4), et **en ce que** la denture (11, 31, 41, 51, 61, 71) présente au moins une deuxième partie (14, 34, 44, 54, 64, 74) qui s'étend sur le côté frontal (7) et dans laquelle le fond de dent (15, 45, 55, 65, 75) forme avec le côté extérieur (5) de la lèvre de rail (4) un angle (a) de plus de 30°, la profondeur de denture (k) mesurée perpendiculairement au fond de dent (13, 33, 43, 53 ,63, 73) étant inférieure à la hauteur totale (f) de la denture (11, 31, 41, 51, 61, 71) mesurée perpendiculairement au côté extérieur (5) de la lèvre de rail (4) dans la première partie (12, 32, 42, 52, 62, 72).

2. Rail selon la revendication 1,
**caractérisé en ce que** l'angle (a) vaut au moins 45°, en particulier 45° à 120°.

3. Rail selon la revendication 1 à 2,
**caractérisé en ce que** la hauteur totale (f) de la denture (11, 31, 41, 51, 61, 71) mesurée perpendiculairement au côté extérieur (5) de la lèvre de rail (4) vaut au moins 120% de la profondeur de denture (k) mesurée perpendiculairement au fond de dent (13) dans la première partie (12, 42, 52, 62, 72) de la denture (11, 31, 41, 51, 61, 71).

4. Rail selon l'une des revendications 1 à 3,
**caractérisé en ce que** la largeur totale (g) de la denture (11, 31, 41, 51, 61, 71) mesurée parallèlement au côté extérieur (5) de la lèvre de rail (4) perpendiculairement à la direction longitudinale (10) vaut au moins 120% de la profondeur de denture (k) mesurée perpendiculairement au fond de dent (13) dans la deuxième partie (14, 34, 44, 54, 64, 74) de la denture (11, 31, 41, 51, 61, 71).

5. Rail selon l'une des revendications 1 à 4,
**caractérisé en ce que** la première partie (12, 32, 42, 52, 62, 72) de la denture (11, 31, 41, 51, 61, 71) présente une largeur (i) mesurée parallèlement au côté extérieur (5) de la lèvre de rail (4) et perpendiculairement à la direction longitudinale (10), laquelle largeur vaut au moins 40%, en particulier au moins 60% de la largeur (e) de la lèvre de rail (4) mesurée parallèlement au côté extérieur (5) de la lèvre de rail (4) et perpendiculairement à la direction longitudinale (10) ainsi que du côté intérieur (24) du côté longitudinal de rail (3) à la fente longitudinale (9).

6. Rail selon l'une des revendications 1 à 5,
**caractérisé en ce que** la deuxième partie (14, 34, 44, 54, 64, 74) de la denture (11, 31, 41, 51, 61, 71) présente une largeur (h) mesurée au niveau du fond de dent (15) perpendiculairement au côté extérieur (5) de la lèvre de rail (4), laquelle largeur vaut au moins 20%, en particulier au moins 40% de l'épaisseur totale (d) de la lèvre de rail (4) mesurée au niveau du point le plus épais de la lèvre de rail (4) perpendiculairement au côté extérieur (5) de la lèvre de rail (4).

7. Rail selon l'une des revendications 1 à 6,
**caractérisé en ce que** la hauteur totale (f) de la denture (11, 31, 41, 51, 61, 71) mesurée perpendiculairement au côté extérieur (5) de la lèvre de rail (4) vaut au moins 40%, en particulier au moins 60% de l'épaisseur totale (d) de la lèvre de rail (4) mesurée au niveau du point le plus épais de la lèvre de rail (4) perpendiculairement au côté extérieur (5) de la lèvre de rail (4).

8. Rail selon l'une des revendications 1 à 7,
**caractérisé en ce que** l'épaisseur (c) de la lèvre de rail (4) mesurée perpendiculairement au côté extérieur (5) de la lèvre de rail (4) au niveau du côté longitudinal de rail (3) est inférieure à l'épaisseur totale (d) de la lèvre de rail (4) mesurée au niveau du point le plus épais de la lèvre de rail (4) perpendiculairement au côté extérieur (5) de la lèvre de rail (4).

9. Rail selon l'une des revendications 1 à 8,
**caractérisé en ce que** l'épaisseur totale (d) de la lèvre de rail (4) mesurée au niveau du point le plus épais de la lèvre de rail (4) perpendiculairement au côté extérieur (5) de la lèvre de rail (4) représente au moins 50 % de la largeur (e) de la lèvre de rail (4) mesurée parallèlement au côté extérieur (5) de la lèvre de rail (4) et perpendiculairement à la direction longitudinale (10) ainsi que du côté intérieur (24) du côté longitudinal de rail (3) à la fente longitudinale (9).

10. Rail selon l'une des revendications 1 à 9,
**caractérisé en ce que** la profondeur de denture (k) mesurée perpendiculairement au fond de dent (13) dans la première partie (12, 42, 52, 62 72) augmente au fur et à mesure que la distance au côté longitudinal de rail (3) augmente.

11. Rail selon l'une des revendications 1 à 10,
**caractérisé en ce que** la longueur totale du fond de dent de la denture (11, 31, 41, 51, 61, 71) est supérieure à la largeur (e) de la lèvre de rail (4) mesurée parallèlement au côté extérieur (5) de la lèvre de rail (4) et perpendiculairement à la direction longitudinale (10) ainsi que du côté intérieur (24) du côté longitudinal de rail (3) à la fente longitudinale (9).

12. Rail selon l'une des revendications 1 à 11,
**caractérisé en ce que** les côtés extérieurs (5) des deux lèvres de rail (4) sont situés dans un plan commun.

13. Rail selon l'une des revendications 1 à 12,
**caractérisé en ce que** le rail (1) est un rail d'ancrage destiné à être noyé dans du béton, rail au dos (2) duquel au moins un élément d'ancrage (23) est fixé.
